# EUROPÄISCHE PATENTANMELDUNG

(11) **EP 0 967 708 A2**
(43) Veröffentlichungstag der Anmeldung: **29.12.1999**
(21) Anmeldenummer: 99111512.2
(22) Anmeldetag: 14.06.1999
(51) Int. Cl.: H02K 1/18, H02K 1/20, H02K 9/16, H02K 5/20

(54) **Elektromotor**

(30) Priorität: 25.06.1998 DE 19828406
(71) Anmelder: SIEMENS AKTIENGESELLSCHAFT, 80333 München (DE)
(72) Erfinder: Sopp, Helmut, 97650 Fladungen (DE); Schüller, Uwe, 98693 Ilmenau (DE)

(57) **Zusammenfassung**

Ein Elektromotor weist zwischen einem Gehäuse (5) und einem Stator (3) einen in Umfangsrichtung des Stators (3) mäanderförmigen und dadurch im wesentlichen axiale Kühlkanäle bildenden selbsttragenden Kühlmantel (1) auf. Eine wärmeleitende Befestigung des Kühlmantels (1) mit dem Stator (3) und/oder dem Gehäuse (5), als auch Umlenkvorrichtungen (19) an den Stirnseiten des Blechpakets des Stators (3) und Ein- und Auslaßöffnungen zur Führung eines Kühlmediums führen zu einer intensiven Stator- und Wickelkopfkühlung.

## Beschreibung

Die Erfindung betrifft einen Elektromotor mit Luftkühlung.

Die DE 22 33 860 beschreibt einen Elektromotor, dessen Stator in Umfangsrichtung mit einem gewellten Blech umhüllt ist. Das gewellte Blech ist durch eine Schweißverbindung bestimmter Blechpartien am Stator fixiert.

Nachteilig dabei ist der unterschiedliche Wärmeübergang Stator zu Blechhülle, ungleichmäßige Wärmeausdehnung der Blechhülle aufgrund der punktuellen Schweißvorgänge und mangelnde Aufnahme und Übertragung von radialen und axialen Kräften der Blechhülle.

Demnach liegt der Erfindung die Aufgabe zugrunde, einen Elektromotor zu schaffen, dessen Aktivteile ausreichend gekühlt werden.

Außerdem ist eine weitere Aufgabe der Erfindung, für einen Elektromotor innerhalb eines vorgegebenen Gehäuses eine vergleichsweise effiziente Kühlung zu schaffen, die neben überdurchschnittlichen Wärmeübergangszahlen ausreichende Stabilität bzgl. der Aufnahme der radialen und axialen Kräfte und des Drehmoments aufweist.

Die Aufgaben werden durch einen Elektromotor gelöst, der folgende Merkmale aufweist:
- ein Gehäuse, vorzugsweise ein Spindelkasten,
- einen Rotor und einen Stator,
- einen in Umfangsrichtung des Stators mäanderförmigen und dadurch im wesentlichen axiale Kühlkanäle bildenden selbsttragenden Kühlmantel,
- eine wärmeleitende Befestigung des Kühlmantels mit dem Stator und/oder dem Spindelkasten durch stoff-, form-, oder reibschlüssige wärmeleitende Verbindungen,
- Umlenkvorrichtungen an den Stirnseiten des Statorblechpakets zur Führung des Kühlmediums in Gegen- oder Gleichstromprinzip,
- Ein- und Auslaßöffnungen zur Führung des Kühlmediums zum und vom Kühlmantel im Bereich der Stirnseiten des Blechpakets des Stators und/oder zwischen den Stirnseiten des Blechpakets des Stators.

Der selbsttragende Kühlmantel vermeidet während der Montage einen vor allem bei gewellten Blechen auftretenden 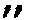 Ziehharmonika-Effekt". Außerdem benötigt der mäanderförmig angeordnete axiale Kühlkanäle aufweisende Kühlmantel bei vergleichsweise hoher Kühleffizienz ein geringes Bauvolumen. Eine spezielle Gestaltung des Kühlmantels ermöglicht zusätzlich zum Gleich- oder Gegenstromprinzip eine gezielte Führung des Kühlmediums, vorzugsweise gasförmige Kühlmedien, wie Luft an thermischen Problemzonen, wie z.B. Spindelkasten-Wickelkopf. Ein effizienter Wärmeübergang zwischen Spindelkasten und Kühlmantel einerseits, als auch zwischen Stator und Kühlmantel andererseits wird vorzugsweise durch eine Wärmeleitpaste in Verbindung mit einem Schrumpfprozess hergestellt.

In einer weiteren Ausführungsform besteht der Kühlmantel aus einem Teil eines Strangpreßprofil, vorzugsweise einem Aluminiumstrangpressprofil. Dadurch kann aufgrund der guten Wärmeleitfähigkeit von Aluminium die Verlustwärme schnell aus dem Spindelkasten und dem Stator abgeführt werden. Die dem Krümmungsradius des Stators und des Spindelkastens angepassten Kühlmantelabschnitte tragen zu einer weiteren Verbesserung des Wärmeübergangs und damit der Kühlung bei. Bei Strangpreßprofilen läßt sich durch Abschneiden die gewünschte Kühlmantellänge dem jeweiligen Motor anpassen. Somit kann der Kühlmantel wirtschaftlich hergestellt werden.

In einer weiteren Ausführungsform können bereits für den Betrieb des Elektromotors notwendigen Funktionsteile, wie z.B. Umlenkvorrichtungen und Befestigungsmittel, wie z.B. axiale Gewindebolzen, im Strangpreßprofil enthalten sein, um so die weitere Montage zu vereinfachen und den gesamten Aufbau kompakter zu gestalten.

Die Erfindung sowie weitere vorteilhafte Ausgestaltungen der Erfindung gemäß den Merkmalen der Unteransprüche werden im folgenden anhand eines schematisch dargestellten Ausführungsbeispiels in der Zeichnung näher erläutert; darin zeigen:
- FIG 1: einen Querschnitt eines Kühlmantels,
- FIG 2: einen Querschnitt eines Elektromotors mit einem derartigen Kühlmantel,
- FIG 3: einen Längsschnitt eines Elektromotors mit einem derartigen Kühlmantel.

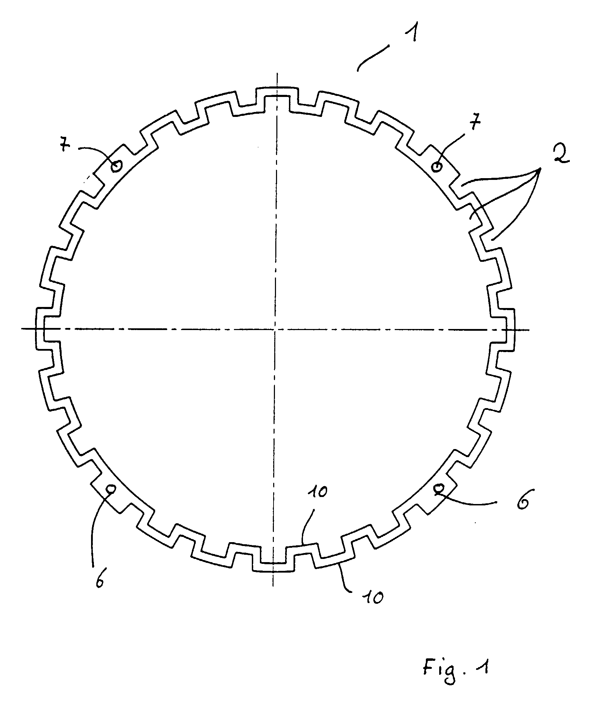

FIG 1 zeigt einen Kühlmantel 1, der axiale Kühlkanäle 2 aufweist. Die axialen Kühlkanäle 2 werden durch ein in Umfangsrichtung eines Stators 3 verlaufendes mäanderförmigen Aluminiumstrangpreßprofil 4 gebildet. Dabei ist die Wanddicke des Aluminiumstrangpreßprofils 4 derart ausgebildet, daß bei Montage des Kühlmantels 1 über den Stator 3 und in einen Spindelkasten 5 kein 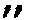 Ziehharmonika-Effekt" auftreten kann. Der Kühlmantel 1 kann aufgeschrumpft oder auch aufgepreßt werden., und kann somit das Drehmoment des Motors aufnehmen. Beim Aufschrumpfungsprozess wird der Kühlmantel 1 induktiv oder in einem Ofen erwärmt. Vier Mäander 6 des Aluminiumstrangpreßprofils 4 sind mit Vollmaterial ausgeführt, um dort eventuelle Funktionsteile des Elektromotors anzubringen, wie z.B. Gewindehülsen 7 zur Befestigung von Flanschen 8 oder Umlenkvorrichtungen 9 eines Luftstroms. Die Summe der am Stator 3 oder innen an einem als Spindelkasten 5 ausgeführten Gehäuse direkt anliegenden Kühlmantelfläche ist ungefähr gleich; sie kann aber je nach Kühlanforderungen dem jeweiligen Zweck angepasst sein. Um die Kühleffizienz weiter zu steigern sind die Anlageflächen 10 des Kühlmantels 1 den jeweiligen Krümmungsradien von Stator 3 und Spindelkasten 5 angepaßt.

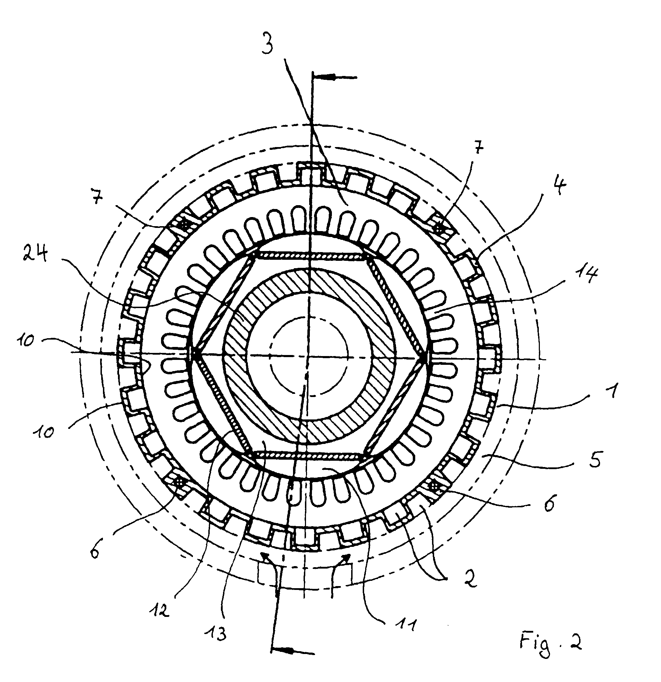

FIG 2 zeigt den Einbau eines derartigen Kühlmantels 1 in einen Elektromotor, der von dem Spindelkasten 5 umgeben ist. Dabei ist ein Rotor 11 mit im wesentlichen, sechseckig angeordneten Permanentmagneten 12 in einem Blechpaket 13 dargestellt. Der Rotor 11 ist auf einer Hülse 24 angeordnet. Das Blechpaket des Stators 3 zeigt ausgebildete Pole 14. Um den Stator 3 erstreckt sich in Umfangsrichtung der Kühlmantel 1 mit seinen durch Mäander gebildeten Kühlkanälen 2, die sich im wesentlichen axial erstrecken. Die mit Vollmaterial versehenen Mäander 6 sind mit Gewindehülsen 7 ausgestattet. In radialer Richtung weiter nach außen schließt sich nach dem Kühlmantel 1 der Spindelkasten 5 an, der Vorrichtungen 15 umfaßt, die zum Ein- bzw. Auslaß eines Kühlmediums (Kühlluftstrom) vorgesehen sind. Dabei kann sowohl die Kühlluftzufuhr als auch die -abfuhr in radialer oder axialer Richtung erfolgen.

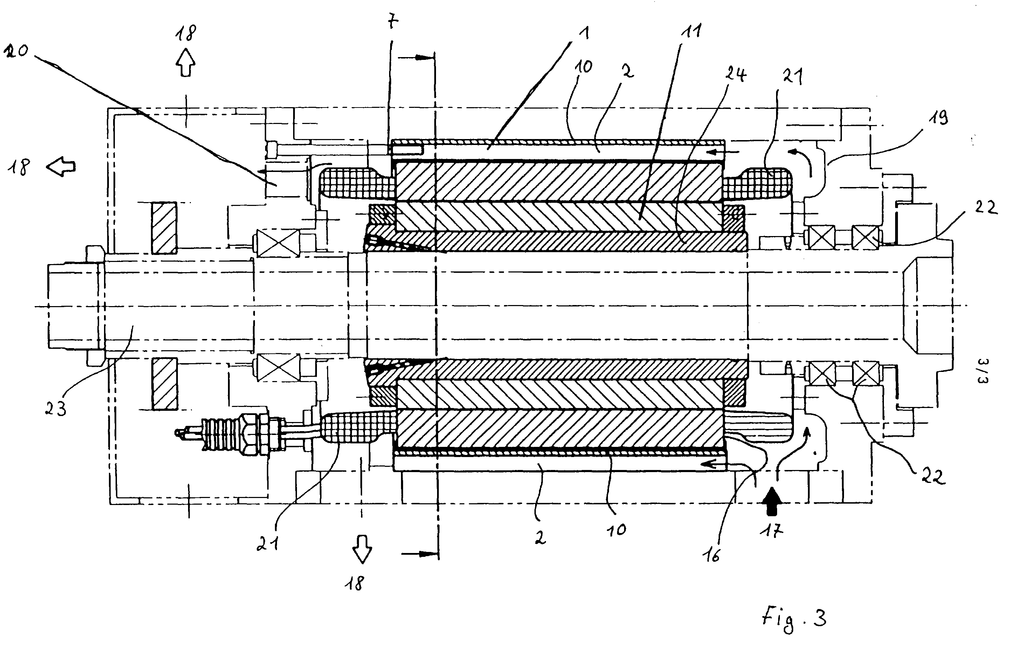

FIG 3 zeigt eine prinzipielle Darstellung eines Elektromotors in einem Spindelkasten 5 im Längsschnitt. Dabei ist an der einen Stirnseite 16 des Statorblechpakets ein Kühlstromeintritt 17 im Spindelkasten vorgesehen, der auch aif der gegenüberliegenden Seite des Stators 3 oder in der Mitte des Stators 3 angeordnet sein kann. Ebenso kann der Austritt des Kühlluftstroms 18 wahlweise axial und/oder radial gewählt werden. Durch Umlenkvorrichtungen 19 und/oder Durchtrittsöffnungen 20 an den Stirnseiten des Stators 3 kann die Kühlung im Gegenstrom- oder Gleichstromprinzip erfolgen. Der in den Spindelkasten 5 eintretende Kühlluftstrom kühlt durch die Umlenkvorrichtungen 19 sowohl die Wickelköpfe 21 als auch die Lager 22 der Welle 23 des Rotors 11. Der aus dem Spindelkasten 5 austretende Kühlluftstrom kühlte auf der dem Einlaß gegenüberliegenden Seite ebenso die Wickelköpfe 21 und die Lager 22 der Welle 23.

## Patentansprüche

1. Elektromotor, der folgende Merkmale aufweist:
a) ein Gehäuse, vorzugsweise ein Spindelkasten (5),
b) einen Stator (3) und einen Rotor (11),
c) einen in Umfangsrichtung des Stators (3) mäanderförmigen und dadurch im wesentlichen axiale Kühlkanäle (2) bildenden, selbsttragenden Kühlmantel (1),
d) eine wärmeleitende Befestigung des Kühlmantels (1) mit dem Stator (3) und/oder dem Spindelkasten (5) durch stoff-, form- und/oder reibschlüssige wärmeleitende Verbindungen,
e) Umlenkvorrichtungen (19) an den Stirnseiten des Blechpakets des Stators (3), zur Führung des Kühlmediums im Gegen- und/oder Gleichstromprinzip,
f) Ein- und Auslaßöffnungen zur Führung des Kühlmediums zum und vom Kühlmantel (1) im Bereich der Stirnseiten des Blechpakets des Stators (3) und/oder zwischen den Stirnseiten des Blechpakets des Stators (3).

2. Elektromotor nach Anspruch 1, **dadurch gekennzeichnet,** daß der Kühlmantel (1) im wesentlichen ein Strangpreßprofil, insbesondere ein Aluminiumstrangpressprofil ist.

3. Elektromotor nach Anspruch 1 oder 2, **dadurch gekennzeichnet,** daß der Kühlmantel (1) Mittel zur Befestigung von Funktionsteilen (7) für den Betrieb des Elektromotors aufweist.

4. Elektromotor nach Anspruch 3, **dadurch gekennzeichnet,** daß der Kühlmantel (1) axiale Gewindehülsen (7), insbesondere zur Befestigung von Flanschen und/oder Umlenkvorrichtungen (19) des Kühlmediums aufweist.
